(19) Europäisches Patentamt
European Patent Office
Office européen des brevets

(11) **EP 4 394 915 A1**

(12) **EUROPEAN PATENT APPLICATION**
published in accordance with Art. 153(4) EPC

(43) Date of publication:
**03.07.2024 Bulletin 2024/27**

(21) Application number: **22900116.9**

(22) Date of filing: **13.10.2022**

(51) International Patent Classification (IPC):
**H01M 4/13** (2010.01) **H01M 50/597** (2021.01)

(52) Cooperative Patent Classification (CPC):
**Y02E 60/10; Y02P 70/50**

(86) International application number:
**PCT/CN2022/125071**

(87) International publication number:
**WO 2023/098311 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 CN 202111442112**

(71) Applicant: **Ningde Amperex Technology Limited Ningde City, Fujian Province 352100 (CN)**

(72) Inventors:
• **LI, Jinghua**
 **Ningde City, Fujian 352100 (CN)**
• **WANG, Xiuhao**
 **Ningde City, Fujian 352100 (CN)**
• **SHI, Weidao**
 **Ningde City, Fujian 352100 (CN)**

(74) Representative: **Icosa**
 **83 avenue Denfert-Rochereau**
 **75014 Paris (FR)**

(54) **ELECTROCHEMICAL DEVICE AND ELECTRONIC DEVICE**

(57) An electrochemical device, including a negative electrode plate, the negative electrode plate includes a negative electrode active layer. A width of the negative electrode active layer is Ha, and along a width direction of the negative electrode active layer, the negative electrode active layer includes a first edge and a second edge opposite to each other, the negative electrode plate includes a first region and a second region, the first region being a region from the first edge to Ha/4 away from the first edge and the second region being a region from Ha/4 away from the first edge to 3Ha/4 away from the first edge. Under 50% state of charge of the electrochemical device, a charge transfer resistance per unit area of the first region and the second region is Rct1 and Rct2 respectively, satisfying: 85%≤Rct1/Rct2≤140%. It helps inhibit lithium precipitation and enhance cycling performance of the electrochemical device.

FIG. 2

## Description

This application claims priority to Chinese Patent Application No. 202111442112.9, filed with the China National Intellectual Property Administration on November 30, 2021 and entitled "ELECTROCHEMICAL DEVICE AND ELECTRONIC DEVICE", which is incorporated herein by reference in its entirety.

## TECHNICAL FIELD

This application relates to the field of electrochemical technologies, and in particular, to an electrochemical device and an electronic device.

## BACKGROUND

Characterized by advantages such as high energy storage density, high open-circuit voltage, low self-discharge rate, long cycle life, and high safety, lithium-ion batteries are widely used in various fields such as portable electric energy storage, electronic devices, and electric vehicles. Accordingly, higher requirements are raised for comprehensive performance of lithium-ion batteries, for example, providing both high charging speed and good cycling performance.

## SUMMARY

Super-fast charging enabled lithium-ion batteries have a high charging speed and therefore are widely applied to portable electronic devices. Positive electrode active layers on positive electrode plates of super-fast charging enabled lithium-ion batteries generally employ a zebra pattern coating method by which multiple parallel active layers are formed along a width direction of the electrode plate. The inventors of this application have found through research that during a coating process, thickness of the active layer in an edge region is smaller than thickness of the active layer in a middle region due to surface tension of a slurry. As electrode plates are wound or stacked, a prepared electrode assembly has an increasing thickness difference between the edge region and the middle region along a width direction of the electrode plates, and as a result, a prepared lithium-ion battery experiences uneven pressure at an end part and a middle part in a hot pressing formation process, so that compactness of a solid electrolyte interface (SEI) film formed on the negative electrode plate varies largely at the end part and the middle part, impacting cycling performance of the lithium-ion battery.

In view of the foregoing problem, this application is intended to provide an electrochemical device and an electronic device, so as to enhance cycling performance of electrochemical devices.

A first aspect of this application provides an electrochemical device including an electrode assembly. The electrode assembly includes a negative electrode plate and a positive electrode plate, where the negative electrode plate includes a negative electrode current collector and a negative electrode active layer on a surface of the negative electrode current collector, and the positive electrode plate includes a positive electrode current collector and a positive electrode active layer on a surface of the positive electrode current collector. A width of the negative electrode active layer is Ha. Along a width direction of the negative electrode active layer, the negative electrode active layer includes a first edge and a second edge opposite to each other, and the negative electrode active layer includes a first region and a second region, the first region being a region from the first edge to Ha/4 away from the first edge and the second region being a region from Ha/4 away from the first edge to 3Ha/4 away from the first edge. The electrochemical device disassembled under a state of charge of 50%, a charge transfer resistance per unit area of the first region is $Rct1$, and a charge transfer resistance per unit area of the second region is $Rct2$, satisfying: $85\% \leq Rct1/Rct2 \leq 140\%$. By controlling the charge transfer resistance ratio of the first region and the second region being within the foregoing range, in one aspect, it can avoid lithium ions gathering on the surface of the negative electrode active layer in the first region and causing a large number of side reactions under an undesirably relatively small charge transfer resistance in the first region, which leads to fast deterioration of resistance later; in another aspect, it can avoid that intercalation of lithium ions into the surface of the negative electrode active layer in the first region is obstructed under an undesirably relatively large charge transfer resistance in the first region, which leads to precipitation of lithium. Therefore, controlling the charge transfer resistance ratio of the first region and the second region being within the foregoing range helps inhibit lithium precipitation of the electrochemical device, enhancing cycling performance of the electrochemical device.

In some embodiments of this application, $110\% \leq Rct1/Rct2 \leq 140\%$. Because electrolyte diffuses easily at an end part of the electrode assembly, during charging and discharging processes, there is a high risk that lithium ions gather at the end part of the electrode assembly and cause side reactions. When $Rct1/Rct2$ is within the foregoing range, the charge transfer resistance $Rct1$ of the negative electrode plate in the first region is relatively large at the end part of the electrode assembly. With the charge transfer resistance $Rct1$ of the first region increased, gathering of lithium ions at the end part of the electrode assembly can be inhibited during charging and discharging processes, reducing the risk of side reactions occurring at the end part of the electrode assembly, thereby enhancing cycling performance of the electrochemical device.

In some embodiments of this application, IRct1-Rct2I<27mΩ/mm². In this case, the charge transfer resistance difference is small between the first region and the second region, helping enhance cycling performance of the electrochemical device.

In some embodiments of this application, an average thickness H1 of the negative electrode active layer in the first region and an average thickness H2 of the negative electrode active layer in the second region satisfy (H2-H1)/H2≤0.15. In this case, the thickness difference of the negative electrode active layer is small between the first region and the second region, making lithiation capacity per unit area more consistent between the first region and the second region. This reduces a risk of local lithium precipitation, thereby enhancing the cycling performance of the electrochemical device.

In some embodiments of this application, 40μm≤H1≤120μm.

In some embodiments of this application, 40μm≤H2≤120μm.

In some embodiments of this application, H2-H1≤5μm.

In some embodiments of this application, the electrochemical device satisfies at least one of the following conditions: (iv) 60mΩ/mm²≤Rct1≤100mΩ/mm², and (v) 60mΩ/mm²≤Rct2≤80mΩ/mm². In this case, an SEI film formed on the negative electrode active layer is compact in the first region and/or the second region, helping enhance cycling performance of the electrochemical device.

In some embodiments of this application, a width of the positive electrode active layer is Hb, and along a width direction of the positive electrode active layer, the positive electrode active layer includes a third edge and a fourth edge opposite to each other, and the positive electrode active layer includes a third region and a fourth region, the third region being a region from the third edge to Hb/4 away from the third edge and the fourth region being a region from Hb/4 away from the third edge to 3Hb/4 away from the third edge, where an average thickness H3 of the positive electrode active layer in the third region and an average thickness H4 of the positive electrode active layer in the fourth region satisfy (H4-H3)/H4≤0.3. By controlling the value of (H4-H3)/H4 being within the foregoing range, in one aspect, it can reduce a thickness difference between the end part and the middle part of the electrode assembly, improving compactness of the SEI film formed on the negative electrode active layer in the first region, and in another aspect, it can reduce a delithiation capacity difference of the positive electrode active layer between the third region and the fourth region, helping reduce lithium precipitation of the negative electrode plate, thereby enhancing cycling performance of the electrochemical device.

In some embodiments of this application, 0.05≤(H4-H3)/H4≤0.2. By controlling (H4-H3)/H4≥0.05, delithiation capacity of the positive electrode active layer in the third region can be decreased. This can reduce the risk of lithium precipitation at the edge of the negative electrode plate, thereby enhancing cycling performance of the electrochemical device.

In some embodiments of this application, 50μm≤H3≤100μm.

In some embodiments of this application, 50μm≤H4≤100μm.

In some embodiments of this application, H4-H3≤25μm.

In some embodiments of this application, observed along a thickness direction of the negative electrode plate, the negative electrode active layer includes a first extension region not overlapping with the positive electrode active layer in a width direction of the negative electrode active layer. The positive electrode plate further includes an insulation layer, and observed along the thickness direction of the negative electrode plate, the insulation layer at least partially overlaps with the first extension region. A width of the negative electrode active layer being greater than a width of the positive electrode active layer can reduce the risk of lithium precipitation at the edge of the negative electrode active layer, but the electrode assembly has a small thickness at the edge because the negative electrode active layer at the edge corresponds to no positive electrode active layer on the opposite side. The provision of the insulation layer can fill a gap at the edge, improving an interface of the negative electrode active layer in the first extension region, reducing a risk of lithium precipitation at the edge of the negative electrode plate, thereby enhancing cycling performance of the electrochemical device.

In some embodiments of this application, the insulation layer includes inorganic particles, facilitating an insulation layer having good hardness which provides sufficient support in a hot pressing formation process. This improves the interface of the negative electrode active layer in the first extension region, thereby enhancing cycling performance of the electrochemical device.

In some embodiments of this application, the insulation layer further includes a binder.

In some embodiments of this application, the inorganic particles include at least one of HfO2, SrTiO₃, SnO₂, CeO₂, MgO, NiO, CaO, BaO, ZnO, ZrO₂, Y₂O₃, Al₂O₃, TiO₂, SiO₂, boehmite, magnesium hydroxide, aluminum hydroxide, lithium phosphate, lithium titanium phosphate, lithium aluminum titanium phosphate, lithium lanthanum titanate, lithium germanium thiophosphate, lithium nitride, SiS₂ glass, P₂S₅ glass, Li₂O, LiF, LiOH, Li₂CO₃, LiAlO₂, lithium germanium phosphorous sulfur ceramics, or garnet ceramics.

In some embodiments of this application, the binder includes at least one of polyvinylidene fluoride, polytetrafluoroethylene, sodium carboxymethyl cellulose, styrene-butadiene rubber, nitrile rubber, polyurethane, fluorinated rubber, polyvinyl alcohol, or polyacrylic acid sodium.

In some embodiments of this application, based on a mass of the insulation layer, a mass percentage of the binder is 5% to 40%.

In some embodiments of this application, an internal resistance R of the electrochemical device is 15mQ to 19mQ.

In some embodiments of this application, a compacted density of the negative electrode active layer is $1.0g/cm^3$ to $1.9g/cm^3$. In some embodiments of this application, a porosity of the negative electrode active layer is 20% to 40%. In some embodiments of this application, a compacted density of the positive electrode active layer is $3.5g/cm^3$ to $4.5g/cm^3$. In some embodiments of this application, a porosity of the positive electrode active layer is 20% to 45%. The electrochemical device satisfying at least one of the foregoing characteristics is conducive to improving cycling performance and/or electrochemical performance of the electrochemical device.

A second aspect of this application further provides an electronic device including the electrochemical device in any one of the foregoing embodiments. The electrochemical device provided in this application has good cycling performance, allowing the electronic device provided in this application to have a long service life.

This application provides an electrochemical device and an electronic device. The electrochemical device includes an electrode assembly, where the electrode assembly includes a negative electrode plate and a positive electrode plate, the negative electrode plate including a negative electrode current collector and a negative electrode active layer on a surface of the negative electrode current collector, and the positive electrode plate including a positive electrode current collector and a positive electrode active layer on a surface of the positive electrode current collector. A width of the negative electrode active layer is Ha, and along a width direction of the negative electrode active layer, the negative electrode active layer includes a first edge and a second edge opposite to each other, and the negative electrode plate includes a first region and a second region, the first region being a region from the first edge to Ha/4 away from the first edge and the second region being a region from Ha/4 away from the first edge to 3Ha/4 away from the first edge. The electrochemical device disassembled under a state of charge of 50%, a charge transfer resistance per unit area of the first region is Rct1, and a charge transfer resistance per unit area of the second region is Rct2, satisfying: $85\% \leq Rct1/Rct2 \leq 140\%$. The charge transfer resistance ratio of the first region and the second region being controlled to be within the foregoing range helps inhibit lithium precipitation of the electrochemical device, enhancing cycling performance of the electrochemical device.

**BRIEF DESCRIPTION OF DRAWINGS**

To describe the technical solutions in embodiments of this application and in the prior art more clearly, the following briefly describes the accompanying drawings required for describing the embodiments or the prior art. Apparently, the accompanying drawings in the following description show merely some of the embodiments of this application, and a person of ordinary skill in the art may still derive other drawings from these accompanying drawings without creative efforts.

FIG. 1 is a schematic diagram of a positive electrode plate prepared using zebra pattern coating;
FIG. 2 is a schematic diagram of a negative electrode active layer according to an embodiment of this application;
FIG. 3 is a schematic diagram of an electrode assembly according to an embodiment of this application;
FIG. 4 is a schematic diagram of a positive electrode active layer according to an embodiment of this application;
FIG. 5 is a schematic diagram of a positive electrode plate according to another embodiment of this application; and
FIG. 6 is a schematic diagram of an electrochemical device with gummed paper provided on the surface according to an embodiment of this application.

**DESCRIPTION OF EMBODIMENTS**

To make the objective, technical solutions, and advantages of this application more comprehensible, the following describes this application in detail with reference to embodiments and accompanying drawings. Apparently, the described embodiments are merely some but not all of the embodiments of this application. All other embodiments obtained by a person of ordinary skill in the art based on the embodiments of this application without creative efforts shall fall within the protection scope of this application.

It should be noted that, in the specific embodiments of this application, a lithium-ion battery being used as an electrochemical device is used as an example to illustrate this application. However, the electrochemical device in this application is not limited to a lithium-ion battery.

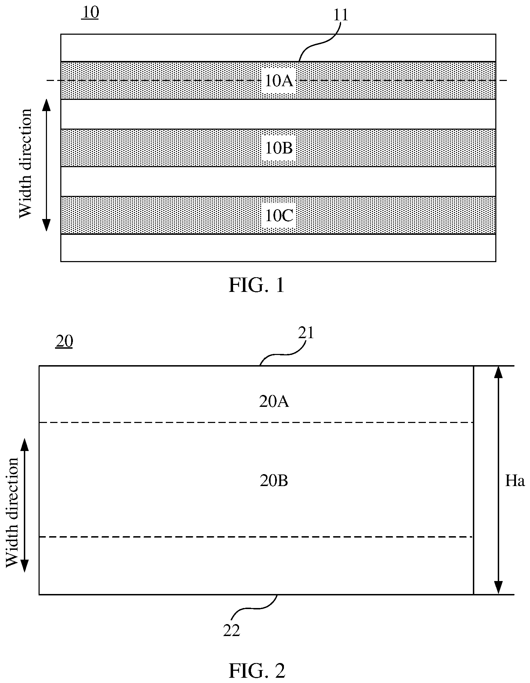

The positive electrode active layer on the positive electrode plate of super-fast charging enabled lithium-ion batteries is generally prepared using a zebra pattern coating method (as shown in FIG.1) by which multiple parallel active layers are formed along a width direction of an electrode plate 10, for example, 10A, 10B, and 10C in FIG. 1. After such preparation, cutting is performed to obtain a positive electrode plate including the active layer which is used for preparation of an electrode assembly. The inventors of this application have found through research that during a coating process, thickness of the active layer in an edge region is smaller than thickness of the active layer in a middle region due to surface tension of a slurry. For example, in a sub-region 10A, thickness of a region near an edge 11 is generally smaller than thickness of a middle part of the sub-region 10A. As electrode plates are wound or stacked, a prepared electrode assembly has an increasing thickness difference between the edge region and the middle region along a width direction of the electrode plates, and as a result, a prepared lithium-ion battery experiences uneven pressure at an end part and a middle part in a hot pressing formation process, so that formation is inadequate in an edge region of the electrode assembly, which is unfavorable for forming of a solid electrolyte interface (SEI) film. As such, in a cycling process of the lithium-ion battery, lithium precipitation is more likely to occur in the edge region of the electrode assembly, affecting cycling performance of the lithium-ion battery.

In view of the foregoing problems, this application provides an electrochemical device and an electronic device, so as to enhance cycling performance of the electrochemical device.

A first aspect of this application provides an electrochemical device including an electrode assembly. The electrode assembly includes a negative electrode plate and a positive electrode plate, where the negative electrode plate includes a negative electrode current collector and a negative electrode active layer on a surface of the negative electrode current collector, and the positive electrode plate includes a positive electrode current collector and a positive electrode active layer on a surface of the positive electrode current collector. A width of the negative electrode active layer is Ha, and as shown in FIG. 2, along a width direction of the negative electrode active layer 20, the negative electrode active layer 20 includes a first edge 21 and a second edge 22 opposite to each other, and the negative electrode active layer includes a first region 20A and a second region 20B, the first region 20A being a region from the first edge 21 to Ha/4 away from the first edge 21 and the second region 20B being a region from Ha/4 away from the first edge 21 to 3Ha/4 away from the first edge 21. The electrochemical device disassembled under a state of charge (SOC) of 50%, a charge transfer resistance per unit area of the first region is Rct1, and a charge transfer resistance per unit area of the second region is Rct2, satisfying: $85\% \leq Rct1/Rct2 \leq 140\%$. For example, a value of Rct1/Rct2 may be 85%, 90%, 100%, 107%, 110%, 120%, 130%, 140%, or in a range defined by any two of these values. The inventors of this application have found that by controlling the charge transfer resistance ratio of the first region and the second region being within the foregoing range, in one aspect, it can avoid lithium ions gathering on the surface of the negative electrode active layer in the first region and causing a large number of side reactions during the charging and discharging processes under an undesirably relatively small charge transfer resistance in the first region, which leads to fast deterioration of resistance later; in another aspect, it can avoid that intercalation of lithium ions into the surface of the negative electrode active layer in the first region is obstructed under an undesirably relatively large charge transfer resistance in the first region, which leads to precipitation of lithium. Therefore, controlling the charge transfer resistance ratio of the first region and the second region being within the foregoing range helps inhibit lithium precipitation of the electrochemical device, enhancing cycling performance of the electrochemical device.

Further, $110\% \leq Rct1/Rct2 \leq 140\%$. Because electrolyte diffuses easily at an end part of the electrode assembly, during charging and discharging processes, there is a high risk that lithium ions gather at the end part of the electrode assembly and cause side reactions. When Rct1/Rct2 is within the foregoing range, the charge transfer resistance Rct1 of the negative electrode plate in the first region is relatively large at the end part of the electrode assembly. With the charge transfer resistance Rct1 of the first region increased, gathering of lithium ions at the end part of the electrode assembly can be inhibited during charging and discharging processes, reducing the risk of side reactions occurring at the end part of the electrode assembly, thereby enhancing cycling performance of the electrochemical device.

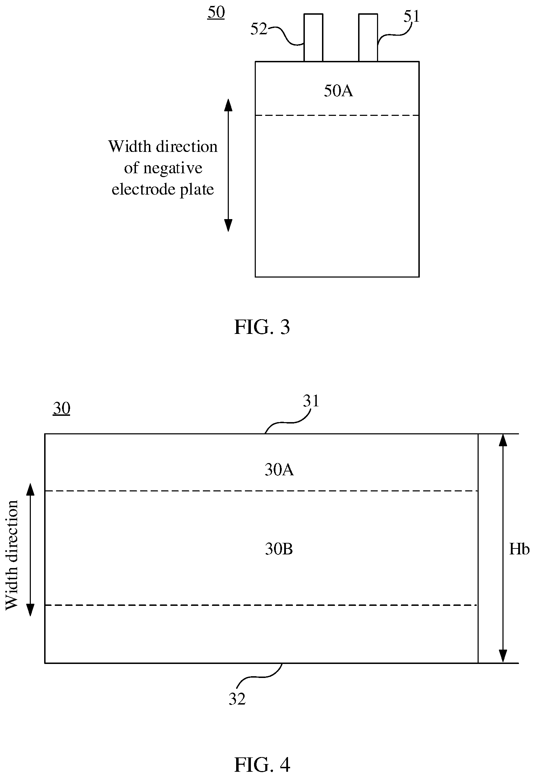

For example, as shown in FIG. 3, an electrode assembly 50 is of a winding structure. The electrode assembly 50 includes a negative electrode tab 51 connecting to a first region of a negative electrode plate (not shown in the figure) and a positive electrode tab 52 connecting to a positive electrode plate (not shown in the figure). The positive electrode tab 52 and the negative electrode tab 51 extend out from an edge region. Along a width direction of the negative electrode plate, the first region (not shown in the figure) corresponds to the edge region 50A of the electrode assembly 50. The negative electrode tab in this application is a metal conductor leading out from the negative electrode plate and configured to lead out current that comes from the negative electrode plate. Material of the negative electrode tab is not particularly limited in this application, and any material known in the art can be used provided that the purpose of this application can be achieved. The electrode assembly in this application may be an electrode assembly including a positive electrode plate, a negative electrode plate, and a separator. The foregoing electrode assembly is used as an example for description. Persons of ordinary skill in the art should understand that the foregoing and following descriptions are used only as examples and do not limit the protection scope of this application.

In some embodiments of this application, $|Rct1-Rct2| \leq 27 m\Omega/mm^2$. For example, a value of $|Rct1-Rct2|$ may be $5 m\Omega/mm^2$, $10 m\Omega/mm^2$, $15 m\Omega/mm^2$, $20 m\Omega/mm^2$, $25 m\Omega/mm^2$, $27 m\Omega/mm^2$ or in a range defined by any two of these values. In this case, the charge transfer resistance difference is small between the first region and the second region, helping enhance cycling performance of the electrochemical device.

In some embodiments of this application, an average thickness H1 of the negative electrode active layer in the first region and an average thickness H2 of the negative electrode active layer in the second region satisfy (H2-H1)/H2≤0.15. For example, a value of (H2-H1)/H2 may be 0.01, 0.02, 0.05, 0.08, 0.1, 0.11, 0.12, 0.13, 0.14, 0.15, or in a range defined by any two of these values. In this case, the thickness difference of the negative electrode active layer is small between the first region and the second region, making lithiation capacity per unit area more consistent between the first region and the second region. This reduces a risk of local lithium precipitation, thereby enhancing cycling performance of the electrochemical device.

In some embodiments of this application, a difference between the average thickness H1 of the negative electrode active layer in the first region and the average thickness H2 of the negative electrode active layer in the second region is H1-H2≤5μm. Values of H1 and H2 are not particularly limited in this application, provided that the purpose of this application can be achieved. For example, 40μm≤H1≤120μm and 40μm≤H2≤120μm.

In some embodiments of this application, the electrochemical device satisfies at least one of the following conditions: (iv) 60mΩ/mm²≤Rct1≤100mΩ/mm², and (v) 60mΩ/mm²≤Rct2≤80mΩ/mm². In this case, an SEI film formed on the negative electrode active layer is compact in the first region and/or the second region, helping enhance cycling performance of the electrochemical device. For example, a value of Rct1 may be 60mΩ/mm², 70mΩ/mm², 80mΩ/mm², 90mΩ/mm², 100mΩ/mm², or in a range defined by any two of these values. For example, a value of Rct2 may be 60mΩ/mm², 65mΩ/mm², 70mΩ/mm², 75mΩ/mm², 80mΩ/mm², or in a range defined by any two of these values.

In some embodiments of this application, a width of the positive electrode active layer is Hb, and as shown in FIG. 4, along a width direction of the positive electrode active layer 30, the positive electrode active layer 30 includes a third edge 31 and a fourth edge 32 opposite to each other, and the positive electrode active layer includes a third region 30A and a fourth region 30B, the third region being a region from the third edge 31 to Hb/4 away from the third edge 31 and the fourth region being a region from Hb/4 away from the third edge 31 to 3Hb/4 away from the third edge 31. An average thickness H3 of the positive electrode active layer in the third region and an average thickness H4 of the positive electrode active layer in the fourth region satisfy (H4-H3)/H4≤0.3. For example, a value of (H4-H3)/H4 may be 0.05, 0.1, 0.15, 0.2, 0.25, 0.3, or in a range defined by any two of these values. It can be understood that in the electrode assembly, the third region and the first region are opposite to each other in position. By controlling the value of (H4-H3)/H4 being within the foregoing range, in one aspect, it can reduce a thickness difference between the end part and the middle part of the electrode assembly, improving compactness of the SEI film formed on the negative electrode active layer in the first region, and in another aspect, it can reduce a delithiation capacity difference of the positive electrode active layer between the third region and the fourth region, helping reduce lithium precipitation of the negative electrode plate, thereby enhancing cycling performance of the electrochemical device. In this application, a difference between an average thickness H3 of the positive electrode active layer in the third region and an average thickness H4 of the positive electrode active layer in the fourth region is H4-H3≤25μm. Values of H3 and H4 are not particularly limited in this application, provided that the purpose of this application can be achieved. For example, 50μm≤H3≤100μm and 50μm≤H4≤100μm.

Further, 0.05≤(H4-H3)/H4≤0.2. By controlling (H4-H3)/H4≥0.05, delithiation capacity of the positive electrode active layer in the third region can be decreased. This can reduce the risk of lithium precipitation at the edge of the negative electrode plate, thereby enhancing cycling performance of the electrochemical device.

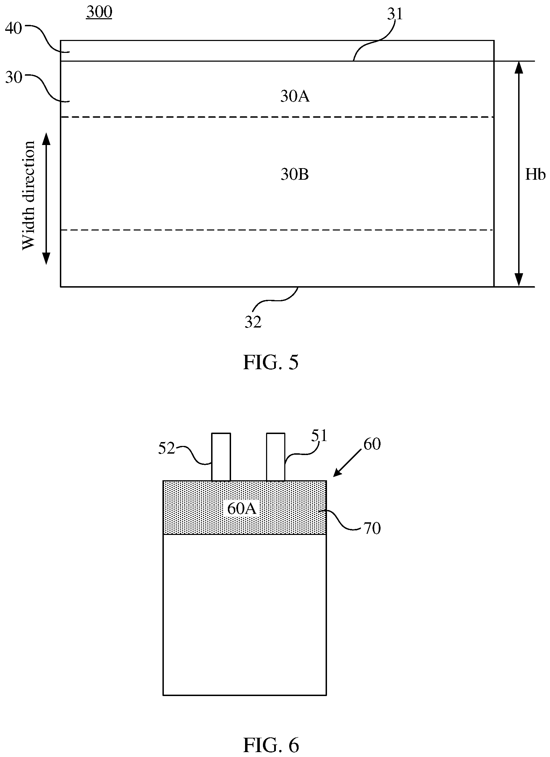

In some embodiments of this application, observed along a thickness direction of the negative electrode plate, the negative electrode active layer comprises a first extension region not overlapping with the positive electrode active layer in a width direction of the negative electrode active layer. The positive electrode plate further includes an insulation layer, and observed along the thickness direction of the negative electrode plate, the insulation layer at least partially overlaps with the first extension region. As shown in FIG. 2 and FIG. 5, a width Ha of the negative electrode active layer 20 is greater than a width Hb of the positive electrode active layer 30, so as to form a first extension region. The positive electrode plate 300 includes the positive electrode active layer 30 and an insulation layer 40 disposed on a surface of a positive electrode current collector (not shown in the figure). Observed along a thickness direction of the negative electrode plate, the insulation layer 40 at least partially overlaps with the first extension region. A width of the negative electrode active layer being greater than a width of the positive electrode active layer can reduce the risk of lithium precipitation at the edge of the negative electrode active layer, but the electrode assembly 50 has a small thickness at the edge because the negative electrode active layer at the edge corresponds to no positive electrode active layer on the opposite side. The provision of the insulation layer can fill a gap at the edge, improving an interface of the negative electrode active layer in the first extension region. This reduces a risk of lithium precipitation at the edge of the negative electrode plate, thereby enhancing cycling performance of the electrochemical device. Along the width direction of the positive electrode active layer 30, the insulation layer 40 is at one side of the positive electrode active layer 30. It can be understood that along the width direction of the positive electrode active layer, the insulation layer may alternatively be at two sides of the positive electrode active layer. This application imposes no specific limitations on an average thickness of the insulation layer and a width of the insulation layer along a width direction of the positive electrode plate, provided that the purpose of this application can be achieved. For example, the average thickness of the insulation layer

is 10μm to 100μm, and the width along the width direction of the positive electrode plate is 0.5mm to 10mm.

In some embodiments of this application, the insulation layer includes inorganic particles, facilitating an insulation layer having good hardness which provides sufficient support in a hot pressing formation process. This improves the interface of the negative electrode active layer in the first extension region, thereby enhancing cycling performance of the electrochemical device.

In some embodiments of this application, the insulation layer further includes a binder.

In some embodiments of this application, the inorganic particles include at least one of HfO2, $SrTiO_3$, $SnO_2$, $CeO_2$, MgO, NiO, CaO, BaO, ZnO, $ZrO_2$, $Y_2O_3$, $Al_2O_3$, $TiO_2$, $SiO_2$, boehmite, magnesium hydroxide, aluminum hydroxide, lithium phosphate, lithium titanium phosphate, lithium aluminum titanium phosphate, lithium lanthanum titanate, lithium germanium thiophosphate, lithium nitride, $SiS_2$ glass, $P_2S_5$ glass, $Li_2O$, LiF, LiOH, $Li_2CO_3$, $LiAlO_2$, lithium germanium phosphorous sulfur ceramics, or garnet ceramics.

In some embodiments of this application, the binder comprises at least one of polyvinylidene fluoride, polytetrafluoroethylene, sodium carboxymethyl cellulose, styrene-butadiene rubber, nitrile rubber, polyurethane, fluorinated rubber, polyvinyl alcohol, or polyacrylic acid sodium.

In some embodiments of this application, based on a mass of the insulation layer, a mass percentage of the binder is 5% to 40%. For example, the mass percentage of the binder may be 5%, 10%, 15%, 20%, 25%, 30%, 35%, 40%, or in a range defined by any two of these values.

In some embodiments of this application, an internal resistance R of the electrochemical device is 15mQ to 19mQ. In some embodiments of this application, a compacted density of the negative electrode active layer is 1.0g/cm$^3$ to 1.9g/cm$^3$. In some embodiments of this application, a porosity of the negative electrode active layer is 20% to 40%. In some embodiments of this application, a compacted density of the positive electrode active layer is 3.5g/cm$^3$ to 4.5g/cm$^3$. In some embodiments of this application, a porosity of the positive electrode active layer is 20% to 45%. The electrochemical device satisfying at least one of the foregoing characteristics is conducive to improving cycling performance and/or electrochemical performance of the electrochemical device.

For example, the internal resistance R of the electrochemical device may be 15mQ, 16mQ, 17mQ, 18mQ, 19mQ, or in a range defined by any two of these values. With the internal resistance of the electrochemical device controlled to be within the foregoing range, the resulting electrochemical device has a relatively high output voltage.

For example, the compacted density of the negative electrode active layer may be 1.0g/cm$^3$, 1.1g/cm$^3$, 1.2g/cm$^3$, 1.3g/cm$^3$, 1.4g/cm$^3$, 1.5g/cm$^3$, 1.6g/cm$^3$, 1.7g/cm$^3$, 1.8g/cm$^3$, 1.9g/cm$^3$, or in a range defined by any two of these values. For example, the compacted density of the positive electrode active layer may be 3.5g/cm$^3$, 3.6g/cm$^3$, 3.7g/cm$^3$, 3.8g/cm$^3$, 3.9g/cm$^3$, 4.0g/cm$^3$, 4.1g/cm$^3$, 4.2g/cm$^3$, 4.3g/cm$^3$, 4.4g/cm$^3$, 4.5g/cm$^3$, or in a range defined by any two of these values. With the compacted density of the negative electrode active layer and/or the positive electrode active layer controlled to be within the foregoing range, energy density of the electrochemical device is improved.

For example, the porosity of the negative electrode active layer may be 20%, 25%, 30%, 35%, 40%, or in a range defined by any two of these values. For example, the porosity of the positive electrode active layer may be 20%, 25%, 30%, 35%, 40%, 45%, or in a range defined by any two of these values. With the porosity of the negative electrode active layer and/or the positive electrode active layer controlled to be within the foregoing range, the resulting electrochemical device has good rate performance.

In this application, the positive electrode active layer may be provided on one surface in a thickness direction of the positive electrode current collector, or may be provided on two surfaces in the thickness direction of the positive electrode current collector. It should be noted that "surface" herein may refer to an entire region of the positive electrode current collector, or refer to a partial region of the positive electrode current collector. This is not particularly limited in this application provided that the objective of this application can be achieved. In this application, the positive electrode current collector is not particularly limited, provided that the objective of this application can be achieved. For example, the positive electrode current collector may include but is not limited to aluminum foil, aluminum alloy foil, or a composite current collector. Thickness of the positive electrode current collector is not particularly limited in this application, provided that the objective of this application can be achieved. For example, the thickness is 8μm to 12μm.

In this application, the positive electrode active layer includes a positive electrode active material. The positive electrode active material is not particularly limited in this application, provided that the objective of this application can be achieved. For example, the positive electrode active material may include at least one of lithium transition metal composite oxides or lithium-containing transition metal phosphate compounds. The foregoing transition metal element is not particularly limited in this application, provided that the objective of this application can be achieved. For example, the transition metal element may include at least one of nickel, manganese, cobalt, or iron. Specifically, the positive electrode active material may include at least one of lithium nickel cobalt manganese oxide (811, 622, 523, 111), lithium nickel cobalt aluminum oxide, lithium iron phosphate, lithium cobalt oxide, lithium manganese oxide, or lithium manganese iron phosphate.

The positive electrode active layer may include a positive electrode binder. The positive electrode binder is not particularly limited in this application, provided that the objective of this application can be achieved. For example, the positive electrode binder may include but is not limited to at least one of fluororesin, polypropylene resin, fiber binder, rubber binder, or polyimide binder.

In this application, the positive electrode active layer may further include a positive electrode conductive agent. The positive electrode conductive agent is not particularly limited in this application, provided that the objective of this application can be achieved. For example, the positive electrode conductive agent may include but is not limited to at least one of conductive carbon black (Super P), carbon nanotubes (CNTs), carbon fiber, acetylene black, flake graphite, Ketjen black, graphene, metal material, or conductive polymer. Preferably, the positive electrode conductive agent includes conductive carbon black and carbon nanotubes. The carbon nanotubes may include but are not limited to a single-walled carbon nanotube and/or a multi-walled carbon nanotube. The carbon fiber may include but is not limited to vapor grown carbon fiber (VGCF) and/or carbon nanofiber. The metal material may include but is not limited to metal powder and/or metal fiber. Specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

Optionally, the positive electrode plate may further include a conductive layer. The conductive layer is sandwiched between the positive electrode current collector and the positive electrode active layer. Composition of the conductive layer is not particularly limited in this application, and the conductive layer may include but is not limited to the foregoing positive electrode conductive agent and the foregoing positive electrode binder.

In this application, the negative electrode active layer may be provided on one surface in a thickness direction of the negative electrode current collector, or may be provided on two surfaces in the thickness direction of the negative electrode current collector. It should be noted that "surface" herein may refer to an entire region of the negative electrode current collector, or may refer to a partial region of the negative electrode current collector. This is not particularly limited in this application provided that the objective of this application can be achieved. The negative electrode current collector is not particularly limited in this application provided that the objective of this application can be achieved. For example, the negative electrode current collector may include but is not limited to copper foil, copper alloy foil, nickel foil, stainless steel foil, titanium foil, foamed nickel, foamed copper, or a composite current collector. Thickness of the negative electrode current collector is not particularly limited in this application, provided that the objective of this application can be achieved. For example, the thickness is $4\mu m$ to $12\mu m$.

In this application, the negative electrode active layer includes a negative electrode active material. The negative electrode active material is not particularly limited, provided that the objective of this application can be achieved. For example, the negative electrode active material includes a carbon material capable of reversibly intercalating/deintercalating lithium ions. The carbon material may be a carbon material known in the art that can be used as a negative electrode active material. For example, the carbon material may include but is not limited to crystalline carbon and/or amorphous carbon. The crystalline carbon may include but is not limited to amorphous, plate-shaped, flake-shaped, spherical or fiber-shaped natural graphite or artificial graphite. The amorphous carbon may include but is not limited to at least one of soft carbon, hard carbon, a mesophase pitch carbonization product, or burnt coke. For example, the negative electrode active material may include but is not limited to at least one of natural graphite, artificial graphite, mesocarbon microbeads (MCMB), hard carbon, soft carbon, silicon, silicon oxide ($SiO_x$, x<2), or a silicon-carbon composite. A mass ratio of silicon to carbon in the silicon-carbon composite is 1:10 to 10:1, and $D_v50$ of the silicon-carbon composite is $0.1\mu m$ to $100\mu m$.

In this application, the negative electrode active layer may further include a negative electrode conductive agent. The negative electrode conductive agent is not particularly limited in this application, provided that the objective of this application can be achieved. For example, the negative electrode conductive agent may include but is not limited to at least one of a carbon-based material, a metal-based material, or a conductive polymer. The carbon-based material is at least one of conductive carbon black, acetylene black, Ketjen black, or carbon fiber. The metal-based material may include but is not limited to metal powder and/or metal fiber. Specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

In this application, the negative electrode active layer may further include a negative electrode binder. The negative electrode binder is not particularly limited in this application, provided that the objective of this application can be achieved. The negative electrode binder may include but is not limited to polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin, or nylon.

Optionally, the negative electrode plate may further include a conductive layer. The conductive layer is sandwiched between the negative electrode current collector and the negative electrode active layer. Composition of the conductive layer is not particularly limited in this application, and the conductive layer may include but is not limited to the foregoing negative electrode conductive agent and the foregoing negative electrode binder.

In this application, the electrochemical device may further include a separator. The separator is not particularly limited in this application, provided that the objective of this application can be achieved. For example, the separator may include but is not limited to at least one of a polyethylene (PE), polypropylene (PP), polytetrafluoroethylene-based polyolefin (PO) separator, polyester film (for example, polyethylene terephthalate (PET) film), cellulose film, polyimide film (PI), polyamide film (PA), spandex or aramid film, woven film, non-woven film (non-woven fabric), microporous film, composite film, separator paper, laminated film, or spinning film. Polyethylene or polypropylene is preferred because of their good performance in preventing short circuit and their ability to improve stability of the lithium-ion battery through the shutdown effect. The separator in this application may be of a porous structure. The pore diameter is not particularly limited, provided that the objective of this application can be achieved. For example, the pore diameter may be $0.01\mu m$ to $1\mu m$. Thickness of the separator is not particularly limited in this application, provided that the objective of this application can be achieved. For example, the thickness is $5\mu m$ to $500\mu m$.

For example, the separator may include a substrate layer and a surface treatment layer. The substrate layer may be a non-woven fabric, film, or composite film of a porous structure. The substrate layer may be but is not limited to at least one of polyethylene, polypropylene, polyethylene terephthalate, or polyimide. Optionally, a polypropylene porous membrane, polyethylene porous membrane, polypropylene nonwoven fabric, polyethylene nonwoven fabric, or polypropylene-polyethylene-polypropylene porous composite membrane can be used. Optionally, the surface treatment layer is provided on at least one surface of the substrate layer, and the surface treatment layer may be a polymer layer or an inorganic layer, or may be a layer formed by a polymer and an inorganic substance.

For example, the inorganic layer may include but is not limited to inorganic particles of the inorganic layer and a binder of the inorganic layer. The inorganic particles of the inorganic layer are not particularly limited in this application. For example, the inorganic particles of the inorganic layer may include but are not limited to at least one of aluminum oxide, silicon oxide, magnesium oxide, titanium oxide, hafnium dioxide, tin oxide, ceria dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic layer binder is not particularly limited in this application. For example, the inorganic layer binder may include but is not limited to at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer may include but is not limited to at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The electrochemical device in this application may further include an electrolyte. The electrolyte may include but is not limited to one or more of a gel electrolyte, a solid electrolyte, or a liquid electrolyte. The liquid electrolyte may include a lithium salt and a non-aqueous solvent.

The lithium salt is not particularly limited in this application, provided that the objective of this application can be achieved. For example, the lithium salt may include but is not limited to at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt includes $LiPF_6$.

The non-aqueous solvent is not particularly limited in this application, provided that the objective of this application can be achieved. For example, the non-aqueous solvent may include but is not limited to at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate compound may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, mevalonolactone, or caprolactone. The ether compound may include but is not limited to at least one of dibutyl ether, tetraglyme, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methylsulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

The electrochemical device in this application is not particularly limited, and may include any device in which an electrochemical reaction occurs. In some embodiments, the electrochemical device may include but is not limited to

**EP 4 394 915 A1**

a lithium metal secondary battery, a lithium-ion secondary battery (lithium-ion battery), a lithium polymer secondary battery, or a lithium-ion polymer secondary battery.

A process for preparing the electrochemical device is well known to a person skilled in the art, and is not particularly limited in this application. For example, the process may include but is not limited to the following steps: stacking a positive electrode, a separator, and a negative electrode in sequence; performing an operation such as winding or folding as needed on the stack to obtain an electrode assembly of a winding structure; putting the electrode assembly into a packaging bag; injecting electrolyte into the packaging bag and sealing the packaging bag to obtain the electrochemical device; or, stacking a positive electrode, a separator, and a negative electrode in sequence, and fastening four corners of the entire stacking structure with adhesive tapes to obtain an electrode assembly of a stacking structure, and putting the electrode assembly into a packaging bag and sealing the packaging bag to obtain the electrochemical device. In addition, if necessary, an overcurrent prevention element, a guide plate, and the like may be placed in the packaging bag to prevent internal pressure increase, overcharge, and overdischarge of the electrochemical device.

In this application, after the foregoing prepared electrochemical device undergoes standing, adhesive paper is disposed on a surface region of the packaging bag corresponding to the first region, and then hot pressing formation processing is performed. Alternatively, after standing, the prepared electrochemical device is put into a hot pressing formation apparatus for hot pressing formation processing, and adhesive paper and/or a protrusion is disposed corresponding to the first region in the hot pressing apparatus. The adhesive paper is $5\mu m$ to $50\mu m$ thick, and the protrusion is $5\mu m$ to $50\mu m$ high. The adhesive paper may be gummed paper or a silicon rubber pad. With the adhesive paper and/or protrusion disposed, pressure is more evenly distributed on the first region and the second region of the negative electrode plate in the hot pressing formation process of the electrochemical device, so as to achieve adequate formation in different regions, thereby helping enhance cycling performance of the electrochemical device. For example, as shown in FIG.6, the electrochemical device 60 includes a positive electrode tab 52 and a negative electrode tab 51. Adhesive paper 70 is disposed on a region 60A on surface of a packaging bag corresponding to the first region (not shown in the figure). The gummed paper and silicon rubber pad are not particularly limited in this application, and any gummed paper and silicon rubber known in the art may be used. This application imposes no particular limitations on temperature, pressure, and time for hot pressing formation, provided that the objective of this applications is achieved. For example, the temperature generally ranges from 60°C to 100°C, the pressure ranges from 600kg to 1000kg, and the time ranges from 40min to 60min. It can be understood that the adhesive paper may be removed after the hot pressing formation processing, and then processes such as degassing and trimming are performed to obtain the electrochemical device. Thickness of the adhesive paper may be selected as needed, provided that the objective of this application is achieved.

A second aspect of this application further provides an electronic device including the electrochemical device in any one of the foregoing embodiments. The electrochemical device provided in this application has good cycling performance, allowing the electronic device provided in this application to have a long service life.

The electronic device in this application is not particularly limited, and the electronic device may be any known electronic device in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

**Examples**

The following describes the embodiments of this application more specifically by using examples and comparative examples. Various tests and evaluations were performed in the following methods. In addition, unless otherwise specified, "parts" and "%" are based on weight.

**Test method and equipment**

**Charge transfer resistance test**

The lithium-ion battery was disassembled under 50% SOC to obtain a negative electrode plate, the negative electrode plate was stored hermetically and then was taken out in a glove box, cutting was performed on a same region to obtain two rectangular samples of size 30mm×15mm, the two samples were arranged in a negative electrode-separator-negative electrode pattern and combined with a packaging bag to assemble a symmetrical battery, an appropriate amount (0.2g) of electrolyte was added (ethylene carbonate, propylene carbonate, and diethyl carbonate were mixed at a mass ratio 3:3:4 in a dry argon atmosphere glove box to obtain an organic solvent, and then lithium salt $LiPF_6$

was added into the organic solvent and the mixture was fully stirred to obtain an electrolyte, where a mass concentration of $LiPF_6$ was 12.5% with respect to a mass of the electrolyte), and sealing was performed. After 6h of standing, an electrochemical impedance spectroscopy (EIS) test was performed at a test temperature of $20\pm5°C$ and a fluctuating voltage of 5mV within a frequency range of 30mHz to 500KHz to obtain a charge transfer resistance.

Charge transfer resistance Rct1 per unit area of the first region was obtained through normalization processing based on area of the samples of size 30mm×15mm cut from the first region of the negative electrode plate; and charge transfer resistance Rct2 per unit area of the second region was obtained through normalization processing based on area of the samples of size 30mm×15mm cut from the second region of the negative electrode plate.

**Cycling capacity retention rate test**

The lithium-ion battery was charged and discharged at 25°C for the first time as follows: charged to 4.05V at a constant current 12A, charged to 9A at a constant voltage 4.05V, charged to 4.15V at a constant current 9A, charged to 7A at a constant voltage 4.15V, and charged to 4.35V at a constant current 7A, charged to 6A at a constant voltage 4.35V, charged to 4.45V at a constant current 6A, charged to 5A at a constant voltage 4.45V, charged to 4.48V at a constant current 5A, and charged to 1A at a constant voltage 4.48V, left standing for 5min, and then discharged to 3.0V at a constant current 3A. A discharge capacity of the 1st cycle was recorded. Then, the charge-discharge operation was repeated for 700 cycles, and a discharge capacity of the 700th cycle was recorded. The cycling capacity retention rate was calculated by using the following formula:

capacity retention rate after 700 cycles at 25°C=(discharge capacity of the 700th cycle/discharge capacity of the 1st cycle)×100%.

**Test of percentage of lithium precipitation by area**

The lithium-ion battery that had undergone the cycling capacity retention rate test was disassembled. Lithium precipitation of the negative electrode plate in the first region was observed. Percentage of lithium precipitation by area =area of lithium precipitation in the first region/area of the first region×100%.

**Thickness swelling rate test**

The lithium-ion battery was charged and discharged at 25°C for the first time as follows. The lithium-ion battery was constant-current charged to 4.45V at a charging rate 0.5C, and then charged to 0.025C at a constant voltage 4.45V. Thickness of the lithium-ion battery at full charge in the first cycle was measured and recorded as H1, and after standing 5min, the lithium-ion battery was constant-current discharged to 3.0V at a discharging rate 0.5C. Then, the charge-discharge operation was repeated for 700 cycles, and thickness of the lithium-ion battery at full charge in the 700th cycle was measured and recorded as H2. The thickness swelling rate was calculated by using the following formula:

$$\text{thickness swelling rate after 700 cycles at } 25°C=[(H2-H1)/H1]\times100\%.$$

**Internal resistance R test**

The positive electrode and negative electrode of the lithium-ion battery were clipped by a positive alligator clip (red) and a negative alligator clip (black) of a resistance tester, and internal resistance data on the screen of the internal resistance tester was read as the internal resistance R of the lithium-ion battery.

**Example 1-1**

<Preparation of positive electrode plate>

A positive electrode active material $LiCoO_2$, a conductive agent acetylene black, and a positive electrode binder polyvinylidene difluoride were mixed at a mass ratio of 94:3:3, N-methylpyrrolidone was added, and the resulting mixture was stirred by a vacuum mixer to obtain a uniform positive electrode slurry. A solid content of the positive electrode slurry was 70%. The positive electrode slurry was evenly applied onto one surface of a positive current collector aluminum foil, and the aluminum foil was dried at 85°C to obtain a positive electrode plate coated with a positive electrode active layer on one surface. The foregoing steps were repeated on the other surface of the aluminum foil to obtain a positive electrode plate coated with a positive electrode active layer on both surfaces. The coating weight of the positive electrode active layer is $(0.451g\pm0.007g)/1540.25mm^2$. Then, cold pressing, slitting, and cutting were performed to obtain a positive electrode plate whose positive electrode active layer was 74mm wide. H3=65$\mu$m, H4=90$\mu$m, (H4-H3)/H4=0.28, compacted density of the positive electrode active layer was 4.15g/cm$^3$, porosity of the positive electrode active layer was 25%, and a pressure of cold pressing was 60 tons.

<Preparation of negative electrode plate>

A negative electrode active material artificial graphite, a negative electrode binder styrene-butadiene rubber, and a thickener sodium carboxymethyl cellulose were mixed at a mass ratio of 96:2:2, deionized water was added, and the resulting mixture was stirred by a vacuum mixer to obtain a uniform negative electrode slurry. A solid content of the negative electrode slurry was 75%. The negative electrode slurry was evenly applied onto one surface of a negative electrode current collector copper foil, and the copper foil was dried at 120°C to obtain a negative electrode plate coated with a negative electrode active layer on one surface. The foregoing steps were repeated on the other surface of the copper foil to obtain a negative electrode plate coated with a negative electrode active layer on both surfaces. The coating weight of the negative electrode active layer is $0.2304\pm0.007g/1540.25mm^2$. Then, cold pressing, slitting, and cutting were performed to obtain a negative electrode plate whose negative electrode active layer was 76mm wide. H1=95$\mu$m, H2=100$\mu$m, (H2-H1)/H2=0.05, compacted density of the negative electrode active layer was 1.74g/cm$^3$, porosity of the negative electrode active layer was 30%, and a pressure of cold pressing was 60 tons.

<Preparation of electrolyte>

In a dry argon atmosphere glove box, ethylene carbonate, propylene carbonate, and diethyl carbonate were mixed at a mass ratio of 3:3:4 to obtain an organic solvent. Then, lithium salt LiPF$_6$ was dissolved into the organic solvent, and the mixture was fully stirred to obtain a uniform electrolyte, where a mass concentration of LiPF$_6$ was 12.5% with respect to a mass of the electrolyte.

<Preparation of separator>

Aluminum oxide and polyvinylidene difluoride were mixed at a mass ratio of 90:10 and the mixture was added into deinoized water to form an inorganic layer slurry with a solid content of 50%. The inorganic layer slurry was evenly coated onto one surface of a porous substrate (polyethylene with a thickness of 5$\mu$m and a porosity of 39%) and dried to obtain a separator including an inorganic layer.

<Preparation of lithium-ion battery>

The positive electrode plate, separator, and negative electrode plate prepared above were stacked in sequence so that the separator was sandwiched between the positive electrode plate and the negative electrode plate for separation, and the stack product was wound to obtain an electrode assembly. The electrode assembly was placed into an aluminum-plastic film packaging bag which was injected with electrolyte after drying, followed by vacuum sealing and standing. Then gummed paper was pasted on an outside of the packaging bag in a position corresponding to the first region, followed by hot pressing formation, and then processes such as degassing and trimming were performed to obtain a lithium-ion battery. Thickness of the gummed paper is 50$\mu$m. The hot pressing formation process included the battery being constant-current charged to 3.3V at 0.02C, then constant-current charged to 3.6V at 0.1C, and finally constant-current charged to 4.45V at 0.2C. The hot pressing formation was performed at a temperature of 85°C and a pressure of 600kg for a time of 42.3min.

Example 1-2 to Example 1-4 were the same as Example 1-1 except that pressure of cold pressing in the preparation of the positive electrode plate was adjusted to 65 tons, 70 tons, and 75 tons respectively so as to obtain H3 and H4 values shown in Table 1, and that H1=98$\mu$m and H2=100$\mu$m in Example 1-4.

Example 1-5 to Example 1-7 were the same as Example 1-3 except that thickness of the gummed paper in the preparation of the lithium-ion battery was adjusted to 40$\mu$m, 30$\mu$m, and 10$\mu$m respectively.

Example 2-1 was the same as Example 1-3 except that the positive electrode plate was prepared in the following steps:

An insulation layer slurry was prepared: a binder polyvinylidene fluoride, sodium carboxymethyl cellulose, and Al$_2$O$_3$ were mixed at a mass ratio of 1:1:8, N-methylpyrrolidone was added, and the resulting mixture was stirred to obtain a uniform insulation layer slurry.

After the positive electrode plate coated with a positive electrode active layer on both surfaces was obtained, the insulation layer slurry was applied onto one side of surface of the positive electrode current collector in a width direction of the positive electrode active layer, where a coating area of the insulation layer slurry is shown in FIG. 5, followed by drying to obtain a positive electrode plate coated with the insulation layer, where along the width direction of the positive electrode plate, width of the insulation layer was 2.6mm and average thickness of the insulation layer was 25μm.

**Example 2-2** and **Example 2-3** were the same as Example 2-1 except that the average thickness of the insulation layer was adjusted according to table 2.

**Comparative Example 1** was the same as Example 1-1 except that no gummed paper was pasted on the outside of the packaging bag in the position corresponding to the first region in the preparation of the lithium-ion battery.

**Comparative Example 2** was the same as Example 1-3 except that no gummed paper was pasted on the outside of the packaging bag in the position corresponding to the first region in the preparation of the lithium-ion battery.

**Comparative Example 3** was the same as Example 1-4 except that thickness of the gummed paper was adjusted to 100μm in the preparation of the lithium-ion battery.

Main preparation parameters and performance tests of the examples and comparative examples were shown in Table 1 and Table 2.

**Table 1**

| | H3 (μm) | H4 (μm) | (H4-H3)/H4 | Internal resistance R (mΩ) | Rct1 (mΩ/mm²) | Rct2 (mΩ/mm²) | Rct1-Rct2 (mΩ/mm²) | Rct1/Rct2 (%) | Percentage of lithium precipitation by area (%) | Cycling capacity retention rate (%) | Thickness swelling rate (%) |
|---|---|---|---|---|---|---|---|---|---|---|---|
| Example 1-1 | 65 | 90 | 0.28 | 17.94 | 75.34 | 67.25 | 8.09 | 112.03 | 0 | 90.35 | 7.62 |
| Example 1-2 | 71 | 91 | 0.22 | 18.06 | 82.83 | 70.08 | 12.75 | 118.19 | 0 | 88.72 | 7.28 |
| Example 1-3 | 73 | 88 | 0.17 | 18.12 | 86.58 | 70.08 | 16.50 | 123.54 | 0 | 91.26 | 6.89 |
| Example 1-4 | 78 | 83 | 0.06 | 18.18 | 90.33 | 65.43 | 24.90 | 138.06 | 0 | 92 | 6.58 |
| Example 1-5 | 73 | 88 | 0.17 | 18.07 | 89.40 | 70.08 | 19.32 | 127.57 | 0 | 89.16 | 6.69 |
| Example 1-6 | 73 | 88 | 0.17 | 17.09 | 84.03 | 70.08 | 13.95 | 119.91 | 0 | 88.81 | 7.17 |
| Example 1-7 | 73 | 88 | 0.17 | 16.17 | 63.37 | 73.49 | 10.12 | 86.23 | 10.7 | 85.26 | 10.5 |
| Comparative Example 1 | 65 | 90 | 0.28 | 16.03 | 35.26 | 70.08 | 34.82 | 50.31 | 25 | 79.71 | 40 |
| Comparative Example 2 | 73 | 88 | 0.17 | 16.17 | 54.69 | 70.08 | 15.39 | 78.04 | 20 | 81.32 | 16.4 |
| Comparative Example 3 | 78 | 83 | 0.06 | 19.26 | 103.13 | 70.08 | 33.05 | 147.16 | 30 | 70.5 | 15.78 |

EP 4 394 915 A1

It can be learned from Examples 1-1 to 1-7 and Comparative Example 1 to Comparative Example 3 that when the value of Rct1/Rct2 is within the range specified in this application, lithium precipitation on the negative electrode plate in the first region is obviously reduced, and the lithium-ion battery obtained has better cycling performance. Specifically, compared with Example 1-7 in which Rct1/Rct2<100%, Examples 1-1 to 1-6 in which 110%≤Rct1/Rct2≤140% perform better in reducing lithium precipitation and enhancing cycling performance. A possible reason is: electrolyte diffuses easily at an end part of the electrode assembly, and therefore during charging and discharging processes, there is a high risk that lithium ions gather at the end part of the electrode assembly and cause side reactions, and when Rct1/Rct2≥110%, the charge transfer resistance Rct1 of the negative electrode plate in the first region is relatively large at the end part of the electrode assembly, inhibiting gathering of lithium ions at the end part of the electrode assembly during charging and discharging processes, thereby reducing the risk of side reactions occurring at the end part of the electrode assembly, and thus decreasing lithium precipitation and enhancing cycling performance of the lithium-ion battery.

**Table 2**

| | Average thickness of insulation layer ($\mu$m) | Internal resistance R (m$\Omega$) | Rct1 (m$\Omega$/mm$^2$) | Rct2 (m$\Omega$/mm$^2$) | Rct1- Rct2 (m$\Omega$/mm$^2$) | Rct1/Rct2 (%) | Percentage of lithium precipitation by area (%) | Cycling capacity retention rate (%) | Thickness swelling rate (%) |
|---|---|---|---|---|---|---|---|---|---|
| Example 1-3 | / | 18.12 | 86.58 | 70.08 | 16.50 | 123.54 | 0 | 91.26 | 6.89 |
| Example 2-1 | 25 | 18.36 | 94.26 | 70.08 | 24.18 | 134.50 | 0 | 95.6 | 6.31 |
| Example 2-2 | 30 | 19.03 | 95.33 | 70.08 | 25.25 | 136.03 | 0 | 96.24 | 6.28 |
| Example 2-3 | 40 | 19.85 | 96.37 | 70.08 | 26.29 | 137.51 | 0 | 98.02 | 6.17 |
| Note: "/" in Table 2 means that a corresponding parameter or substance is not present. | | | | | | | | | |

It can be learned from Example 1-3, Example 2-1, and Example 2-3 that the provision of the insulation layer can further enhance cycling performance of the lithium-ion battery. A possible reason is: a width of the negative electrode active layer being greater than a width of the positive electrode active layer can reduce the risk of lithium precipitation at the edge of the negative electrode active layer, but the electrode assembly has a small thickness at the edge because the negative electrode active layer at the edge corresponds to no positive electrode active layer on the opposite side, and the provision of the insulation layer can fill a gap at the edge, improving an interface of the negative electrode active layer in the first extension region, thereby enhancing cycling performance of the electrochemical device.

It should be noted that relational terms such as "first" and "second" are used only to differentiate one entity from another entity without requiring or implying the actual presence of any such relationship or order between these entities. Terms "comprise", "include", or any of their variants are intended to cover a non-exclusive inclusion, so that a process, a method, an article, or a device that includes a list of elements not only includes those elements, but also includes other elements that are not expressly listed, or further includes elements inherent to such process, method, article, or device.

The embodiments in this specification are described in a related manner, each embodiment focuses on the difference from other embodiments, and the same and similar parts between the embodiments may refer to each other.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1.   An electrochemical device, comprising an electrode assembly, wherein the electrode assembly comprises a negative electrode plate and a positive electrode plate, the negative electrode plate comprising a negative electrode current collector and a negative electrode active layer on a surface of the negative electrode current collector, and the positive electrode plate comprising a positive electrode current collector and a positive electrode active layer on a surface of the positive electrode current collector, wherein a width of the negative electrode active layer is Ha, and along a width direction of the negative electrode active layer, the negative electrode active layer comprises a first edge and a second edge opposite to each other, and the negative electrode active layer comprises a first region and a second region, the first region being a region from the first edge to Ha/4 away from the first edge and the second region being a region from Ha/4 away from the first edge to 3Ha/4 away from the first edge; and

the electrochemical device disassembled under a state of charge of 50%, a charge transfer resistance per unit area of the first region is Rct1, and a charge transfer resistance per unit area of the second region is Rct2, satisfying: 85%≤Rct1/Rct2≤140%.

2. The electrochemical device according to claim 1, wherein the electrochemical device satisfies at least one of the following conditions:

   (i)

$$110\% \leq Rct1/Rct2 \leq 140\%;$$

   (ii)

$$|Rct1-Rct2| \leq 27 m\Omega/mm2;$$

   and
   (iii) an average thickness H1 of the negative electrode active layer in the first region and an average thickness H2 of the negative electrode active layer in the second region satisfy (H2-H1)/H2≤0.15.

3. The electrochemical device according to claim 1, wherein the electrochemical device satisfies at least one of the following conditions:

   (iv)

$$60 m\Omega/mm2 \leq Rct1 \leq 100 m\Omega/mm2;$$

   and
   (v)

$$60 m\Omega/mm2 \leq Rct2 \leq 80 m\Omega/mm2.$$

4. The electrochemical device according to claim 1, wherein a width of the positive electrode active layer is Hb, and along a width direction of the positive electrode active layer, the positive electrode active layer comprises a third edge and a fourth edge opposite to each other, and the positive electrode active layer comprises a third region and a fourth region, the third region being a region from the third edge to Hb/4 away from the third edge and the fourth region being a region from Hb/4 away from the third edge to 3Hb/4 away from the third edge, wherein an average thickness H3 of the positive electrode active layer in the third region and an average thickness H4 of the positive electrode active layer in the fourth region satisfy (H4-H3)/H4≤0.3.

5. The electrochemical device according to claim 4, wherein the electrochemical device satisfies at least one of the following conditions:

   (vi)

$$0.05 \leq (H4-H3)/H4 \leq 0.2;$$

   (vii)

$$50\mu m \leq H3 \leq 100\mu m;$$

(viii)

$$50\mu m \leq H4 \leq 100\mu m;$$

and
(ix)

$$H4-H3 \leq 25\mu m.$$

6. The electrochemical device according to claim 2, wherein the electrochemical device satisfies at least one of the following conditions:

(1)

$$40\mu m \leq H1 \leq 120\mu m;$$

(2)

$$40\mu m \leq H2 \leq 120\mu m;$$

and
(3)

$$H2-H1 \leq 5\mu m.$$

7. The electrochemical device according to claim 1, wherein observed along a thickness direction of the negative electrode plate, the negative electrode active layer comprises a first extension region not overlapping with the positive electrode active layer in a width direction of the negative electrode active layer; and the positive electrode plate further comprises an insulation layer, and observed along the thickness direction of the negative electrode plate, the insulation layer at least partially overlaps with the first extension region.

8. The electrochemical device according to claim 7, wherein the insulation layer comprises a binder and inorganic particles, and the insulation layer satisfies at least one of the following conditions:

(a) the inorganic particles comprise at least one of $HfO_2$, $SrTiO_3$, $SnO_2$, $CeO_2$, MgO, NiO, CaO, BaO, ZnO, $ZrO_2$, Y2O3, $Al_2O_3$, $TiO_2$, $SiO_2$, boehmite, magnesium hydroxide, aluminum hydroxide, lithium phosphate, lithium titanium phosphate, lithium aluminum titanium phosphate, lithium lanthanum titanate, lithium germanium thio-phosphate, lithium nitride, $SiS_2$ glass, $P_2S_5$ glass, $Li_2O$, LiF, LiOH, $Li_2CO_3$, $LiAlO_2$, lithium germanium phosphorous sulfur ceramics, or garnet ceramics;
(b) the binder comprises at least one of polyvinylidene fluoride, polytetrafluoroethylene, sodium carboxymethyl cellulose, styrene-butadiene rubber, nitrile rubber, polyurethane, fluorinated rubber, polyvinyl alcohol, or polyacrylic acid sodium; or
(c) based on a mass of the insulation layer, a mass percentage of the binder is 5% to 40%.

9. The electrochemical device according to claim 1, wherein the electrochemical device satisfies at least one of the following conditions:

(d) an internal resistance R of the electrochemical device is 15mΩ to 19mΩ;
(e) a compacted density of the negative electrode active layer is $1.0g/cm^3$ to $1.9g/cm^3$;
(f) a porosity of the negative electrode active layer is 20% to 40%;

(e) a compacted density of the positive electrode active layer is 3.5g/cm$^3$ to 4.5g/cm$^3$; and

(f) a porosity of the positive electrode active layer is 20% to 45%.

**10.** An electronic device, comprising the electrochemical device according to any one of claims 1 to 9.

10    11

10A

Width direction

10B

10C

FIG. 1

20    21

20A

Width direction

20B

Ha

22

FIG. 2

50

52 — 51

50A

Width direction
of negative
electrode plate

FIG. 3

30 31

30A

Width direction

30B

Hb

32

FIG. 4

FIG. 5

FIG. 6

## INTERNATIONAL SEARCH REPORT

| International application No. |
| --- |
| **PCT/CN2022/125071** |

**A. CLASSIFICATION OF SUBJECT MATTER**

H01M 4/13(2010.01)i; H01M 50/597(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, VEN, CNTXT, CNKI: 电极, 阳极, 负极, 阴极, 正极, 端, 边, 宽度, 高度, 阻抗, 电阻, 内阻, electrode, anode, cathode, terminal, side, width, impedance, resistance

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114156433 A (NINGDE AMPEREX TECHNOLOGY LTD.) 08 March 2022 (2022-03-08)<br>  claims 1-10 | 1-10 |
| A | CN 109980177 A (NINGDE AMPEREX TECHNOLOGY LTD.) 05 July 2019 (2019-07-05)<br>  description, paragraphs 48-135 | 1-10 |
| A | CN 110197894 A (NINGDE AMPEREX TECHNOLOGY LTD.) 03 September 2019 (2019-09-03)<br>  entire document | 1-10 |
| A | WO 2021132208 A1 (GS YUASA INTERNATIONAL LTD.) 01 July 2021 (2021-07-01)<br>  entire document | 1-10 |
| A | JP 2013182712 A (TOYOTA MOTOR CORP.) 12 September 2013 (2013-09-12)<br>  entire document | 1-10 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 December 2022** | **12 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/125071**

| Patent document cited in search report | | | Publication date (day/month/year) | Patent family member(s) | | | Publication date (day/month/year) |
|---|---|---|---|---|---|---|---|
| CN | 114156433 | A | 08 March 2022 | None | | | |
| CN | 109980177 | A | 05 July 2019 | US | 2020313186 | A1 | 01 October 2020 |
| CN | 110197894 | A | 03 September 2019 | US | 2019267609 | A1 | 29 August 2019 |
| WO | 2021132208 | A1 | 01 July 2021 | DE | 112020006313 | T5 | 13 October 2022 |
| | | | | CN | 115210903 | A | 18 October 2022 |
| JP | 2013182712 | A | 12 September 2013 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111442112